Europäisches Patentamt

(19) European Patent Office

Office européen des brevets

(11) Numéro de publication : **0 310 534 B1**

(12) **FASCICULE DE BREVET EUROPEEN**

(45) Date de publication du fascicule du brevet :
20.03.91 Bulletin 91/12

(51) Int. Cl.⁵ : **F16L 37/08**

(21) Numéro de dépôt : 88470018.8

(22) Date de dépôt : 22.09.88

(54) Garniture d'étanchéité pour joints verrouillés télescopiques.

(30) Priorité : 01.10.87 FR 8713756

(43) Date de publication de la demande :
05.04.89 Bulletin 89/14

(45) Mention de la délivrance du brevet :
20.03.91 Bulletin 91/12

(84) Etats contractants désignés :
AT CH DE ES FR GB IT LI

(56) Documents cités :
DE-A- 2 235 391
GB-A- 1 550 624
US-A- 2 201 372

(73) Titulaire : **PONT-A-MOUSSON S.A.**
**91, Avenue de la Libération**
**F-54017 Nancy (FR)**

(72) Inventeur : **Bucher, Claude**
**5, rue de l'Imagerie**
**F-54700 Pont-A-Mousson (FR)**
Inventeur : **Lagabe, André**
**20, rue de la Mairie Montauville**
**F-54700 Pont-A-Mousson (FR)**

(74) Mandataire : **Puit, Thierry et al**
**Centre de Recherches de Pont-à-Mousson**
**Service de Propriété Industrielle Boîte Postale 109**
**F-54704 Pont-à-Mousson Cédex (FR)**

# Description

La présente invention est relative aux joints verrouillés pour tuyaux à bout mâle et à emboîtement avec interposition d'une garniture d'étanchéité en élastomère. Elle a plus particulièrement pour objet une garniture d'étanchéité pour joints verrouillés téléscopiques dans lesquels le bout uni de l'un des tuyaux pénètre dans l'emboîtement de l'autre tuyau en comprimant radialement la garniture d'étanchéité.

En effet, lorsqu'un joint d'étanchéité a été réalisé, il convient ensuite d'empêcher les mouvements axiaux d'un tuyau par rapport à l'autre. Ces mouvements sont en effet de nature à affaiblir la bonne étanchéité du joint, voire à désolidariser complètement les tuyaux initialement joints.

Ce problème devient particulièrement crucial dans le cas de canalisations transportant des fluides sous pression. En effet, la pression du fluide engendre alors des forces importantes, à chaque changement de direction, tendant à désolidariser les éléments constitutifs du joint.

On connaît ainsi des dispositifs dans lesquels les éléments de canalisation sont mis en butée contre des fondations ancrées dans le sol. L'inconvénient majeur de tels dispositifs est qu'ils sont très onéreux et qu'ils ne peuvent pas toujours être mis en place.

On a proposé, par ailleurs, des dispositifs de verrouillage dans lequels des pièces mécaniques annexes, telles que des brides, sont utilisés pour rendre solidaires les éléments tubulaires à joindre. Ces dispositifs sont très difficiles à poser puisqu'ils nécessitent l'utilisation de plusieurs pièces mécaniques avec, généralement, des boulons, dont on sait que la mise en oeuvre sur chantier est très délicate.

Par ailleurs il est généralement nécessaire de modifier l'emboîtement et le bout mâle des tuyaux à joindre avec, en plus, la réalisation d'une gorge annulaire sur le bout mâle qui est de nature à affaiblir la résistance mécanique du joint.

C'est ainsi que l'on a finalement proposé des garnitures d'étanchéité dans lesquelles sont insérés, régulièrement répartis, des éléments de verrouillage, ces éléments de verrouillage étant situés à la partie avant de la garniture, côté ouverture de l'emboîtement. On connaît, par le brevet FR 2 186 621, de telles garnitures dans lesquelles les éléments de verrouillage sont munis de plusieurs dents, les éléments de verrouillage pouvant tourner par glissement contre une surface interne de l'emboîtement.

Mais l'expérience montre que de telles garnitures présentent à l'usage plusieurs problèmes.

En premier lieu, les inserts métalliques, dans le cas d'un diamètre maximal du bout mâle, repoussent le corps d'étanchéité de la garniture de telle façon que l'étanchéité n'est pas toujours assurée.

En second lieu, la plage des tolérances diamètrales admises par un tel verrouillage est faible, plus particulièrement, elle est inférieure à la plage des tolérances de fabrication des tuyaux ce qui impose de trier lesdits tuyaux.

Enfin, dans le cas d'un mouvement de recul du bout mâle hors de l'emboîtement, le pivotement des inserts est limité par le nez de l'emboîtement. Ceci fait que les inserts ne vont plus accrocher la surface externe du bout mâle, mais frotter contre ledit bout mâle, le verrouillage n'étant ainsi plus assuré.

La présente invention a donc pour but de réaliser une garniture d'étanchéité en élastomère à l'intérieur de laquelle sont insérés des éléments de verrouillage, qui, d'une part, autorisent le verrouillage efficace de tuyaux à bout mâle et emboîtement dans une plage de tolérances diamètrales importantes, et qui, d'autre part, ne perturbent pas l'étanchéité.

La présente invention a donc pour objet une garniture d'étanchéité d'axe X-X munie d'éléments de verrouillage, pour la jonction étanche entre un bout mâle d'un premier tuyau et un emboîtement d'un second tuyau présentant, après un collet d'entrée, une gorge coaxiale audit emboîtement, la garniture d'étanchéité étant du type présentant, à sa face externe, un talon d'ancrage prolongé par un corps d'étanchéité du type fonctionnant par compression radiale, le talon d'ancrage étant destiné à venir se loger dans la gorge de l'emboîtement, les éléments de verrouillage étant constitués d'une première branche parallèle à l'axe X-X et d'une seconde branche faisant un angle de 80 à 100° par rapport à l'axe X-X et prolongeant la première branche dans le sens radial interne, la première branche, parallèle à l'axe X-X, étant située dans le talon d'ancrage de la garniture à la surface externe de ce dernier.

D'autres caractéristiques et avantages apparaîtront au cours de la description qui va suivre faite en référence aux dessins annexés donnés uniquement à titre d'exemple non limitatif et parmi lesquels :

– la Fig. 1 est une vue partielle en coupe axiale de l'emboîtement d'un tuyau dans lequel est logée la garniture d'étanchéité de l'invention après l'introduction du bout mâle d'un autre tuyau ;

– la Fig. 2 est une vue en coupe axiale de la garniture d'étanchéité à l'état libre suivant l'invention ;

– la Fig. 3 est une vue en coupe axiale, analogue à la Fig. 2, d'une variante de la garniture d'étanchéité suivant l'invention.

– la Fig. 4 est une vue en coupe axiale, analogue aux Fig. 2 et 3, d'une seconde variante de la garniture d'étanchéité selon l'invention.

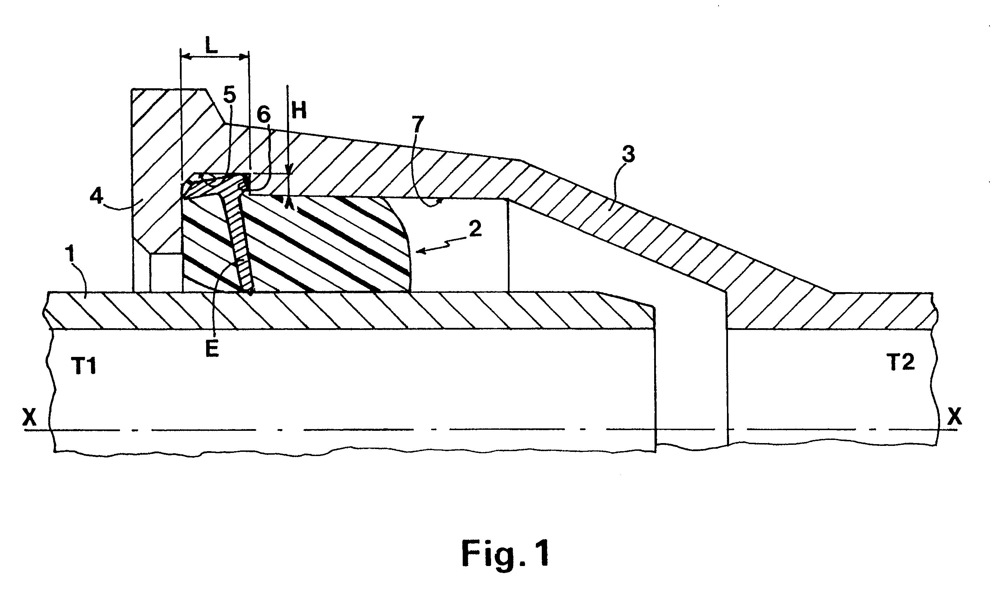

Selon l'exemple de réalisation représenté plus particulièrement à la Fig. 1, un joint d'étanchéité est constitué d'un bout mâle 1 d'un tuyau T1, d'une garniture d'étanchéité annulaire 2, en élastomère d'une dureté de 55° à 75° SHORE A, munie d'éléments E de verrouillage en métal, et d'un emboîtement 3 d'un tuyau T2, les tuyaux T1 et T2 étant coaxiaux suivant un axe X-X. L'emboîtement 3 présente, à son extrémité d'entrée, après un collet 4, une gorge cylindrique 5, de longueur axiale L, coaxiale à l'emboîtement 3. Cette gorge 5 est suivie, après un décrochement formé par un épaulement 6, par une paroi 7 de l'emboîtement 3 de diamètre inférieur au diamètre interne de la gorge 5. Selon l'exemple de réalisation représenté à la Fig. 1, la paroi 7 est cylindrique d'axe X-X. Le décrochement radial précité est d'une hauteur H.

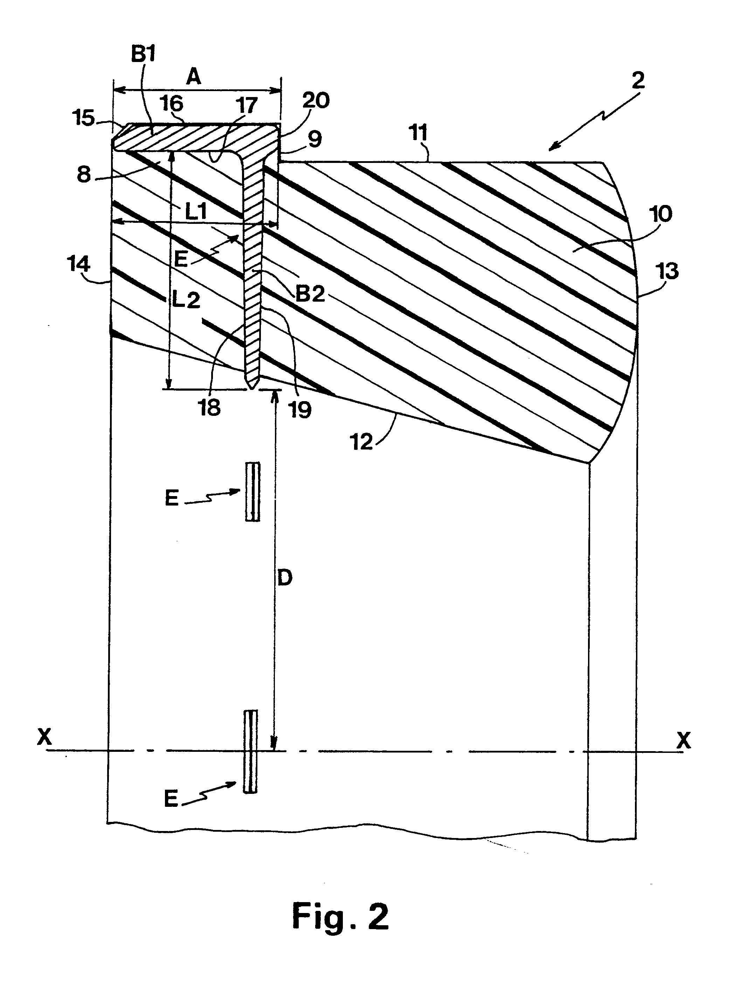

La garniture d'étanchéité 2, telle que représentée Fig. 2, en partie seulement, présente, à sa face externe, un talon d'ancrage 8, de largeur A correspondant à celle de la gorge 5. Selon l'exemple de réalisation représenté Fig. 2, la surface externe du talon d'ancrage 8 est cylindrique d'axe X-X. Ce talon d'ancrage est prolongé, selon l'axe X-X, par un corps d'étanchéité 10 de surface externe de révolution 11 d'axe X-X. Selon le mode de réalisation réprésenté Fig. 2 cette surface 11 est cylindrique.

Le talon d'ancrage 8 se raccorde à la surface 11 par une joue transversale 9 qui forme un décrochement entre les surfaces périphériques du talon 8 et du corps 10.

Le diamètre externe du talon d'ancrage 8 correspond au diamètre interne de la gorge 9 de l'emboîtement 3, la surface externe de la garniture 2, constituée par le talon d'ancrage 8, la joue 9 et la surface 11, étant d'un profil correspondant au profil de l'emboîtement 3 constituée par la gorge 5, l'épaulement 6 et la paroi 7.

La garniture d'étanchéité 2 présente, à sa face interne, une surface tronconique 12.

Cette surface tronconique 12 se raccorde à la surface 11 du corps 10 par une surface courbe 13. Le corps d'étanchéité 10 est donc constitué par les surfaces 11, 12 et 13.

La garniture d'étanchéité 2 est limitée, à son extrémité opposée à la surface courbe 13, par une face radiale d'extrémité 14 qui se raccorde au talon d'ancrage 8 par un chanfrein 15. Cette surface 14 et ce chanfrein 15 sont destinés à venir en contact avec une face interne correspondante du collet 4 de l'emboîtement 3.

Le diamètre de l'arête constituée par les faces 12 et 13 est plus faible que le diamètre de l'arête constituée par les faces 12 et 14, le diamètre du bout mâle du tuyau T1 devant pénétrer dans l'emboîtement T2 étant compris entre ces deux diamètres extrêmes.

Cette garniture d'étanchéité 2 est pourvue, régulièrement réparties au niveau du talon d'ancrage 8, d'entailles radiales dans lesquelles sont placés les éléments de verrouillage E. Selon un autre mode de fabrication, la garniture pourrait être surmoulée sur les éléments de verrouillage E. Chaque élément de verrouillage E a la forme d'un "sept" constitué donc d'une branche horizontale B1 de longueur L1 et d'une branche verticale B2 de longueur L2 prolongeant, dans le sens radial interne, la branche B1, à son extrémité située du côté du corps d'étanchéité 10.

La branche verticale B2 se termine, à son extrémité inférieure, par un biseau.

Selon l'exemple de réalisation représenté Fig. 2, la branche verticale B2 fait un angle de 90° avec la branche horizontale B1, mais cet angle peut varier de plus ou moins 10°.

La longueur L1 de la branche horizontale B1 est inférieure à la largeur axiale A du talon d'ancrage 8. Selon un mode préférentiel de réalisation, la longueur de la branche B1 est inférieure de 0,5 mm à 1 mm à la largeur A de ce talon 8.

La branche horizontale B1 est constituée d'une surface externe 16 et d'une surface interne 17 parallèles, la branche verticale B2 étant constituée de deux surfaces parallèles 18 et 19. La surface interne 17 de la branche B1 se raccorde à la surface 18 de la branche B2, alors que la surface externe 16 de la branche B1 se raccorde à la surface 19 de la branche B2 par l'intermédiaire d'une surface bombée 20, en saillie.

La branche horizontale B1 est destinée à prendre place dans le talon d'ancrage 8 de la garniture 2, leurs surfaces externes respectives étant d'un même diamètre par rapport à l'axe XX de la garniture 2.

La saillie 20 est destinée à venir en appui contre l'épaulement 6 de l'emboîtement 3. L'extrémité inférieure de la branche B2 est à une distance D de l'axe XX de la garniture 2.

Selon un mode de réalisation préférentiel de l'invention, il est placé, dans la garniture d'étanchéité 2, des éléments de verrouillage E présentant des branches verticales B2 de plusieurs longueurs qui définissent donc plusieurs diamètres.

Ainsi, pour un tuyau en fonte d'un diamètre externe de 100 mm, il a été choisi de poser quinze éléments de verrouillage, cinq éléments de verrouillage ayant une hauteur de 17,5 mm, cinq autres éléments de verrouillage ayant une hauteur de 18,5 mm, et enfin les cinq derniers éléments de verrouillage ayant une hauteur de 19,5 mm.

MONTAGE :

Après avoir introduit la garniture d'étanchéité 2, munie de ses éléments de verrouillage E, dans son logement à l'intérieur de l'emboîtement 3, on introduit le bout mâle du tuyau T1 dans l'emboîtement 3 du tuyau T2. On assiste donc à une compression du corps d'étanchéité 10.

Par ailleurs, les branches verticales B2 des éléments de verrouillage E vont, entrant en contact avec le bout mâle du tuyau T1, s'incliner en glissant par leur surface en saillie 20 contre l'épaulement 6 de l'emboîtement 3.

Ainsi, ces branches verticales B2 acquièrent une certaine inclinaison par rapport à la verticale.

Lorsqu'il y a un mouvement de recul du bout mâle (inférieur à 2 mm), par exemple résultant de la mise en pression de la canalisation, les extrémités en biseau des branches B2 des éléments de verrouillage E, qui sont en appui sur la surface externe du bout mâle, pénètrent dans l'épaisseur de la paroi dudit bout mâle. Cette pénétration n'a lieu que pour des valeurs de l'inclinaison des branches verticales B2 inférieure à une certaine limite qui est fonction des matériaux utilisés et de l'état de surface du bout mâle.

Cette pénétration est favorisée par le fait que la masse d'élastomère située en avant de la garniture 2, sous la surface 17 de la branche horizontale B1, en avant de la surface 18 de la branche B2, tend à être comprimée, entre la surface externe du bout mâle 1 du tuyau T1 et la branche horizontale B2 par un mouvement de rotation de l'élément de verrouillage E autour de la saillie 20 contre l'épaulement 6 de l'emboîtement 3.

Cette masse d'élastomère joue ainsi le rôle de ressort de rappel tendant à ramener automatiquement la branche B2 de l'élément de verrouillage E dans sa position initiale.

Par ailleurs, les branches verticales B2 des éléments de verrouillage E sont de plusieurs longueurs. Ceci permet, d'une part, d'assurer le verrouillage de tuyaux dans des gammes de tolérances qui sont simplement fonction du nombre d'éléments de verrouillage E et des différentes longueurs de leurs branches verticales B2, en permettant d'avoir toujours un nombre suffisant d'éléments de verrouillage dont l'inclinaison est inférieure à la valeur limite indiquée ci-dessus. Ceci permet, d'autre part, un verrouillage efficace à toute la périphérie du bout mâle 1, même si, comme c'est le cas sur chantier, ce bout mâle 1 est excentré, ou dévié, par rapport à l'emboîtement 3.

Enfin, on voit que, si la force de verrouillage est insuffisante, le bout mâle 1 va tendre à sortir de l'emboîtement 3. Les éléments de verrouillage E vont alors tourner autour de l'extrémité de la branche horizontale B1 opposée à la saillie 20 contre la surface interne du collet 4. Ainsi la distance de l'extrémité du biseau de la branche B2 par rapport à l'axe XX va diminuer augmentant ainsi la force de verrouillage par une plus grande pénétration de l'élément E à la périphérie du bout mâle 1, accroissant encore l'effet de coin.

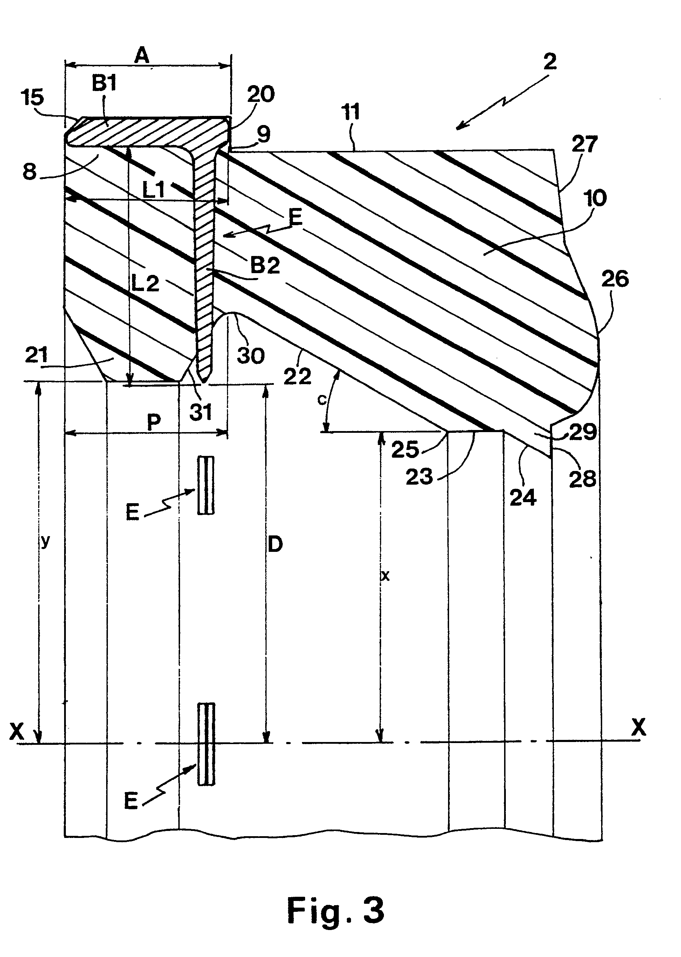

Selon une variante de l'invention, représentée Fig.3, la garniture d'étanchéité 2 présente, à sa surface interne, un pied annulaire 21 (protubérance annulaire 21), de section trapézoïdale sur l'exemple, en prolongement radial interne du talon 8, c'est-à-dire en vis-à-vis du talon 8, et de diamètre interne inférieur au diamètre externe minimal du bout mâle 1, la largeur P de ce pied 21, à la grande base du profil trapézoïdal, étant égale à celle A du talon 8.

Le corps 10, de section essentiellement trapézoïdale, faisant suite au pied 21, à petite base située au côté de ce pied 21 et à grande base située du côté du fond de l'emboîtement 3, présente une première surface interne 22 faisant un angle $\underline{c}$ d'environ 35° par rapport à l'axe X-X de la garniture d'étanchéité 2. Cette première surface 22 est suivie d'une seconde surface interne 23 parallèle à l'axe de la garniture 2 et terminée par une surface interne tronconique 24 faisant un angle d'environ 20° avec l'axe de ladite garniture d'étanchéité 2. L'arête 25 formée par l'intersection des surfaces 22 et 23 est d'un diamètre $\underline{x}$ inférieur au diamètre minimal $\underline{y}$ du pied 21 constitué par la petite base du profil trapézoïdal de ce pied 21. La face transversale de l'extrémité du corps 10 à l'opposé du talon 21, c'est-à-dire du côté du fond de l'emboîtement 3, est constituée par un lobe annulaire 26, en saillie axiale par rapport à cette face transversale, et deux faces 27 et 28 constituant une partie de ladite face transversale de part et d'autre du lobe 26. La surface 28 forme avec la surface 24 une petite lèvre triangulaire 29 à profil en dent de scie. De plus, la garniture d'étanchéité 2 présente une gorge triangulaire 30, située entre le pied 21 et le corps 10, limitée par le dièdre constitué par un flanc 31 du pied 21 et la surface 22 du corps 10.

Les éléments de verrouillage E ont, là encore, la forme d'un "sept", la branche horizontale B1 étant située dans le talon d'ancrage 8 de la garniture d'étanchéité 2, la branche verticale B2 prolongeant dans le sens radial interne la branche horizontale B1.

Ainsi, l'extrémité en biseau de cette branche verticale B2 débouche, hors de la garniture, immédiatement derrière le pied 21 dans la gorge 30.

Un joint comportant une garniture d'étanchéité de ce type fonctionne selon le mode suivant.

L'introduction d'un bout mâle 1 d'un tuyau T1 dans un emboîtement 3, muni de la garniture d'étanchéité 2, entraîne la compression du pied 21 ce qui repousse le talon d'ancrage 8 au fond de la gorge 5 de logement dans l'emboîtement 3. Ceci assure donc une stabilité parfaite de ladite garniture d'étanchéité 2 à l'intérieur de l'emboîtement 3.

Le bout mâle 1 entre ensuite en contact avec l'extrémité en biseau des éléments de verrouillage E. Comme décrit ci-avant, les branches verticales B2 tendent donc à s'incliner, les éléments de verrouillage E tournant par glissement de leur surface 20 contre l'épaulement 6 de l'emboîtement 3.

La fonction de rappel de la masse d'élastomère comprise en avant de chaque élément de verrouillage E, sous chaque branche horizontale B1, est accentuée par la compression préalable du pied 21.

Par ailleurs, la gorge 30 permet à chaque branche verticale B2 de s'incliner sans pour autant repousser le corps d'étanchéité 10. Ainsi, grâce à cette gorge 30, il n'y a aucune perturbation de l'étanchéité.

Enfin, le pied 21 permet de protéger la zone d'ancrage, ou pénètrent le biseaux d'extrémité des éléments de verrouillage E dans la surface externe du bout mâle 1, contre les agressions des fluides extérieurs à la canalisation.

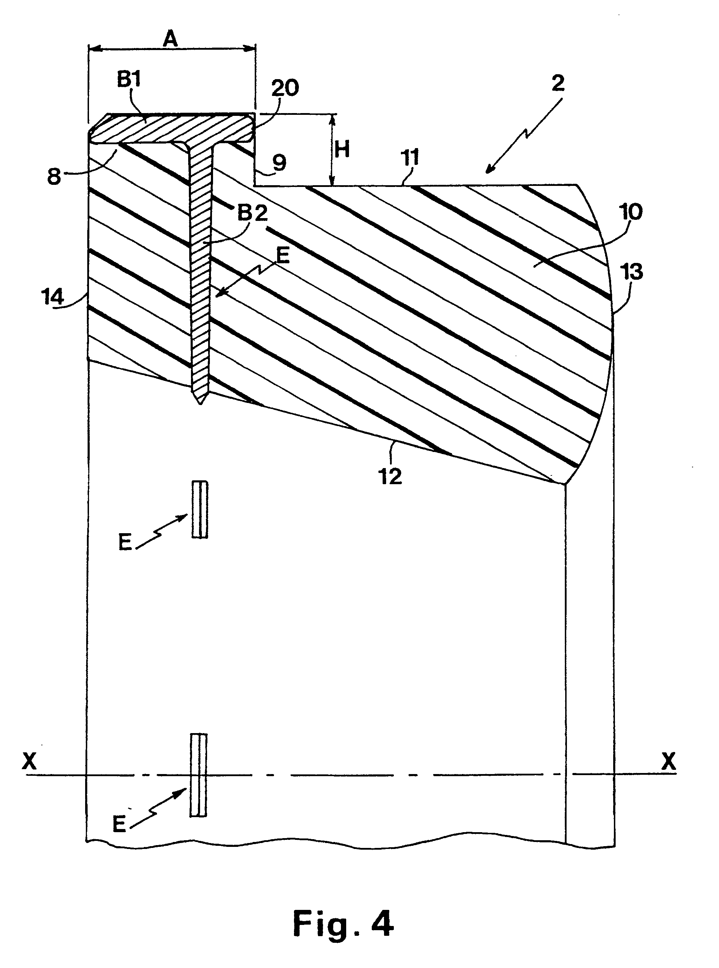

Selon une autre variante de l'invention représentée Fig. 4, il peut être intéressant, pour accroître l'ancrage de la garniture 2 dans l'emboîtement 3, de disposer d'un talon 8 logé dans une gorge 5 d'une hauteur H plus importante que celle représentée à la Fig. 1, le talon d'ancrage 8 étant alors d'une hauteur H correspondante.

La saillie 20 devient alors insuffisante pour permettre une rotation de l'élément de verrouillage E et donc une inclinaison de la branche B2. En effet, cette branche B2 entre immédiatement en contact avec l'arête de l'emboîtement 2 constituée par l'épaulement 6 et la face 7.

Une solution à ce problème est constituée par une avancée de la branche B2, la saillie 20 se développant d'autant, pour produire un élément de verrouillage E qui a désormais la forme d'un "té".

Le fonctionnement d'un joint muni d'une telle garniture est identique à celui décrit précédemment.

## Revendications

1. Garniture d'étanchéité d'axe X-X munie d'éléments de verrouillage (E), pour la jonction étanche entre un bout mâle (1) d'un premier tuyau (T1) et un emboîtement (3) d'un second tuyau (T2) présentant, après un collet d'entrée (4), une gorge (5) coaxiale audit emboîtement (3), la garniture d'étanchéité (2) étant du type présentant, à sa face externe, un talon d'ancrage (8) prolongé par un corps d'étanchéité (10) du type fonctionnant par compression radiale, le talon d'ancrage (8) étant destiné à venir se loger dans la gorge (5) de l'emboîtement (3), caractérisée en ce que les éléments de verrouillage (E) sont constitués d'une première branche (B1) parallèle à l'axe X-X et d'une seconde branche (B2) faisant un angle de 80 à 100° par rapport à l'axe X-X et prolongeant la première branche (B1) dans le sens radial interne, la première branche (B1), parallèle à l'axe X-X, étant située dans le talon d'ancrage (8) de la garniture d'étanchéité (2) à la surface externe de ce dernier.

2. Garniture d'étanchéité selon la revendication 1 caractérisée en ce que, la branche (B1) étant constituée d'une surface externe (16) et d'une surface interne (17), la branche (B2) étant constituée de deux surfaces (18, 19) la surface interne (17) de la branche (B1) se raccorde à la surface (18) de la branche (B2) alors que la surface externe (16) de la branche (B1) se raccorde à la surface (19) de la branche (B2) par l'intermédiaire d'une saillie (20) destinée à venir en appui contre un épaulement (6) de l'emboîtement (3).

3. Garniture d'étanchéité selon la revendication 2 caractérisée en ce que chaque élément de verrouillage (E) a la forme d'un "sept".

4. Garniture d'étanchéité selon la revendication 2 caractérisée en ce que chaque élément de verrouillage (E) a la forme d'un "té".

5. Garniture d'étanchéité selon la revendication 1 caractérisée en ce que une masse d'élastomère est située à l'avant de ladite garniture (2) et est comprise entre la surface interne (17) de la branche (B1) et la surface (18) de la branche (B2).

6. Garniture d'étanchéité selon la revendication 1 caractérisée en ce que les éléments de verrouillage (E) présentent des branches (B2) de plusieurs longueurs.

## Ansprüche

1. Dichtungsgarnitur mit einer Achse X-X, die mit Verriegelungselementen (E) versehen ist, für die dichte Verbindung zwischen einem männlichen Ende (1) eines ersten Rohres (T1) und einem Gehäuse (3) eines zweiten Rohres (T2), welche nach einem Eingangskragen (4) einen Hals (5) aufweist, koaxial zum Gehäuse (3), wobei die Dichtungsgarnitur (2) vom Typ ist, der an seiner Außenseite einen Ankerungsansatz (8) aufweist, der durch einen Dichtungskörper (10) verlängert ist, vom Typ, der durch radiale Komprimierung wirkt, wobei der Ankerungsansatz (8) dazu bestimmt ist, in dem Hals (5) des Gehäuses (3) zu liegen zu kommen, **dadurch gekennzeichnet,** daß die Verriegelungselemente (E) aus einem ersten Arm (B1), der parallel zur Achse X-X ist, und einem zweiten Arm B2 gebildet werden, der einen Winkel von 80° bis 100° bezüglich der Achse X-X bildet, und den ersten Arm (B1) in eine Richtung radial nach innen verlängert, wobei der erste Arm (B1) parallel zur Achse X-X in dem Ankerungsansatz (8) der Dichtungsgarnitur (2) an der Außenseite des letzteren angeordnet ist.

2. Dichtungsgarnitur nach Anspruch 1, **dadurch gekennzeichnet,** daß der Arm (B1) aus einer Außenfläche (16) und einer Innenfläche (17) gebildet wird, der Arm (B2) aus zwei Flächen (18, 19) gebildet wird, wobei die Innenfläche (17) des Armes (B1) an die Fläche (18) des Armes (B2) anschließt, wo hingegen die Außenfläche (16) des Armes (B1) sich an die Fläche (19) des Armes (B2) mittels eines Vorsprungs (20) anschließt, der dazu bestimmt ist, gegen eine Schulter (6) des Gehäuses (7) in Anlage zu kommen.

3. Dichtungsgarnitur nach Anspruch 2, **dadurch gekennzeichnet,** daß jedes Verriegelungselement (7) die Form einer "Sieben" hat.

4. Dichtungsgarnitur nach Anspruch 2, **dadurch gekennzeichnet,** daß jedes Verriegelungselement (E) die Form eines "t" hat.

5. Dichtungsgarnitur nach Anspruch 1, **dadurch gekennzeichnet,** daß eine elastomere Masse vor der Garnitur (2) angeordnet ist und zwischen der Innenfläche (17) des Armes (B1) und der Fläche (18) des Armes (B2) liegt.

6. Dichtungsgarnitur nach Anspruch 1, **dadurch gekennzeichnet,** daß die Verriegelungselemente (E) Arme (B2) von unterschiedlichen Längen aufweisen.

## Claims

1. Packing with an X-X axis provided with locking elements (E), for a sealed joint between a male end (1) of a first pipe (T1) and a socket end (3) of a second pipe (T2) comprising, after an inlet collar (4), a groove (5) coaxial with said socket end (3), the packing (2) being of the type comprising, on its outer face, an anchoring heel (8) extended by a sealing body (10) of the type operating by radial compression, the anchoring heel (8) being intended to be seated in the groove (5) of the socket end (3), characterised in that the locking elements (E) are constituted by a first branch (BI) parallel to the axis X-X and by a second branch (B2) forming an angle of 80 to 100° with respect to the axis X-X and extending the first branch (B1) in the radially inward direction, the first branch (B1) parallel to the axis X-X, being situated in the anchoring heel (8) of the packing (2) on the outer surface of the latter.

2. Packing according to Claim 1, characterised in that the branch (B1) is constituted by an external surface (16) and an internal surface (17), the branch (B2) being constituted by two surfaces (18, 19), the internal surface (17) of the branch (B1) joins the surface (18) of the branch (B2), whereas the external surface (16) of the branch (B1) joins the surface (19) of the branch (B2) by means of a projection (20) intended to bear against a shoulder (6) of the socket end (3).

3. Packing according to Claim 2, characterised in that each locking element (E) has the shape of a "seven".

4. Packing according to Claim 2, characterised in that each locking element (E) has the shape of a "T".

5. Packing according to Claim 1, characterised in that an elastomer mass is disposed at the front of said packing (2) and is comprised between the internal surface (17) of the branch (B1) and the surface (18) of the branch (B2).

6. Packing according to Claim 1, characterised in that the locking elements (E) have branches (B2) of several lengths.

Fig. 1

**Fig. 2**

# Fig. 3

**Fig. 4**